# EUROPÄISCHE PATENTANMELDUNG

(11) **EP 1 391 643 A2**
(43) Veröffentlichungstag der Anmeldung: **25.02.2004**
(21) Anmeldenummer: 03016748.0
(22) Anmeldetag: 23.07.2003
(51) Int. Cl.: F16J 15/34

(54) **Gleitringdichtung**

(30) Priorität: 21.08.2002 DE 10238166
(71) Anmelder: Federal-Mogul Friedberg GmbH, 86316 Friedberg (DE)
(72) Erfinder: Zutz, Hans-Henning, 42929 Wermelskirchen (DE)

(57) **Zusammenfassung**

Gleitringdichtung (1), insbesondere Laufwerkdichtung, bestehend aus einem winkelförmigen Gleit- und/oder Gegenring (2) mit einer zur Aufnahme eines ringförmigen, im Querschnitt etwa tellerfederförmigen Dichtkörpers (4) bestimmten Umfangsfläche, wobei der Dichtkörper (4) bedarfsweise eine in den Bereich des Dichtschenkels (3) des Gleitund/oder Gegenringes (2) weisende Sekundärdichtung (7) beinhaltet und sich mit Teilbereichen seiner äußeren Umfangsfläche an korrespondierenden Flächenbereichen einer Aufnahmebohrung (8) abstützt, wobei radial zwischen der äußeren Umfangsfläche des Gleit- und/oder Gegenringes (2) und der Aufnahmebohrung (8) ein, im Einbauzustand am Dichtkörper (4) anliegendes ringförmig ausgebildetes Sicherungselement (10) vorgesehen ist.

## Beschreibung

Die Erfindung betrifft eine Gleitringdichtung, insbesondere Laufwerkdichtung, bestehend aus einem winkelförmigen Gleit- und/oder Gegenring mit einer zur Aufnahme eines ringförmigen, im Querschnitt etwa tellerfederförmigen Dichtkörpers bestimmten Umfangsfläche, wobei der Dichtkörper bedarfsweise eine in den Bereich des Dichtschenkels des Gleit- und/oder Gegenringes weisende Sekundärdichtung beinhaltet und sich mit Teilbereichen seiner äußeren Umfangsfläche an korrespondierenden Flächenbereichen einer Aufnahmebohrung abstützt.

Der US-A 4,256,315 ist eine derartige Gleitringdichtung zu entnehmen. Zur Verhinderung des Eintretens von Schmutz in den Gleitflächenbereich weist der tellerfederförmige Dichtkörper eine Sekundärdichtung in Form einer einstückig an dem Dichtkörper angeformten Dichtlippe auf.

In der DE-C 197 53 918 wird eine Gleitringdichtung beschrieben, bei welcher die Sekundärdichtung aus einem formstabilen druckfesten Werkstoff besteht, die als separates Bauteil ausgebildet und mit dem Dichtkörper verbunden ist sowie sich axial an dem Dichtschenkel abstützt.

Durch die DE-A 31 41 512 ist ein Gleit- und/oder Gegenring einer Gleitringdichtung bekannt geworden, der insbesondere zum Einsatz unter relativ hohen Drücken geeignet ist, mit einer zur Aufnahme wenigstens eines elastischen Rollkörpers bestimmten kegeligen Umfangsfläche, wobei sich der Rollkörper im Einbauzustand zwischen der kegeligen Umfangsfläche und einer ebenfalls kegelig ausgebildeten korrespondierenden Umfangsfläche eines den Gleit- und/oder Gegenring aufnehmenden Maschinen- bzw. Gehäuseteiles erstreckt. Zwischen dem Gleit- und/oder Gegenring und dem korrespondierenden Maschinen- bzw. Gehäuseteil befindet sich mediumseitig mindestens eine weitere Sekundärdichtstelle. Selbige ist vorteilhafterweise durch einen O-Ring gebildet, der in einer umlaufenden Nut im zylindrischen Bereich des Gleitund/oder Gegenringes angeordnet ist. Der O-Ring ist hierbei stets auf der dem Druck zugewandten Seite vorgesehen.

Laufwerkdichtungen in winkelförmiger Ausführung kommen vielfach auch in Achsen mit sogenannten nassen Bremsen zum Einsatz, bei denen ein erhöhter Spül-/Kühldruck des Schmieröles ansteht und abgedichtet werden muß. Konstruktionsbedingt ist der zumutbare Innendruck bei dieser Dichtungskonfiguration gegenüber Laufwerkdichtungen, wie sie beispielsweise in der DE-A 31 41 512 beschrieben sind, wesentlich höher. Hier kann es geschehen, dass durch den am rückwärtigen Teil des Dichtkörpers anstehenden Druck der Dichtkörper aus seinem zylindrischen Sitz in der Aufnahmebohrung herausgedrückt wird. Damit ist die Gleitringdichtung nicht mehr funktionsfähig. Im Hinblick auf den gegebenen geringen Bauraum sind auch Lösungsansätze, wie sie in der DE-A 31 41 512 vorgestellt werden, nicht geeignet, um diesem speziellen Problem gerecht zu werden.

Der Erfindung liegt die Aufgabe zugrunde, die im gattungsbildenden Teil des ersten Patentanspruches beschriebene Gleitringdichtung, insbesondere Laufwerkdichtung, dahingehend weiterzubilden, dass sie auch einen höheren Innendruck zuläßt und damit für den genannten Anwendungsfall sicher einsetzbar ist.

Diese Aufgabe wird dadurch gelöst, dass radial zwischen der äußeren Umfangsfläche des Gleit- und/oder Gegenringes und der Aufhahmebohrung ein im Einbauzustand am Dichtkörper anliegendes ringförmig ausgebildetes Sicherungselement vorgesehen ist. Vorteilhafte Weiterbildungen des Erfindungsgegenstandes sind den Unteransprüchen zu entnehmen.

Durch den Erfindungsgegenstand ist es nicht notwendig, den eigentlichen und bekannten Dichtungsquerschnitt zu verändern. Die Dichtung wird in der üblichen Form von Hand in die zylindrische Bohrung eingeschoben und die ggf. vorhandene Sekundärdichtlippe wird radial verformt und liegt dann, wie im Stand der Technik beschrieben, innerhalb der zylindrischen Bohrung an. Anschließend wird das Sicherungselement, bestehend aus einem ausreichend elastischen Ring, vorzugsweise aus faserverstärktem Kunststoff (Polyamid) oder anderen geeigneten Werkstoffen, in den radialen Freiraum zwischen Gleit- und/oder Gegenring und Aufnahmebohrung eingedrückt. Sind am Außenumfang des Sicherungselementes Ansätze oder Profile vorgesehen, ist es sinnvoll, die äußere Umfangsfläche der Aufhahmebohrung mit entsprechend ausgebildeten Hinterschneidungen zu versehen, in welche die Ansätze/Profile beim axialen Eindrücken des Sicherungselementes in die Aufnahmebohrung dann einrasten können. Durch diese Maßnahme wird das Sicherungselement in seiner Position axial und damit gegen Ausdrücken sicher arretiert. Am Sicherungselement kann bei Vorhandensein einer Sekundärdichtlippe der dieser zugewandte Bereiche keilförmig ausgebildet werden, so dass die Sekundärdichtlippe radial nach außen gedrückt wird. Durch diese Maßnahme wird ein zusätzlicher Dichteffekt erzielt.

Mit dem Erfindungsgegenstand wird, ohne großen herstellertechnischen Aufwand, eine Lösung bereitgestellt, die den Einsatz einer mit winkelförmigen Gleit- und/oder Gegenringen ausgestatteten Laufwerkdichtung auch in Bereichen möglich macht, bei denen ein erhöhter Innendruck gegeben ist.

Bei konstruktionsbedingt stabileren Querschnitten des Sicherungselementes kann dieses in geeigneter Form radial von innen und/oder von außen geschlitzt werden, um die notwendige Elastizität beim Eindrücken zu optimieren.

Je nach Druckhöhe kann die Anzahl der tragenden Ansätze/Profile am Außenumfang des Sicherungselementes bedarfsweise erhöht werden. Im Hinblick auf einen optimalen Sitz kann hier vorteilhafterweise auf ein Sägezahnprofil zurückgegriffen werden.

Der Erfindungsgegenstand ist anhand eines Ausführungsbeispieles in der Zeichnung dargestellt und wird wie folgt beschrieben. Es zeigen:

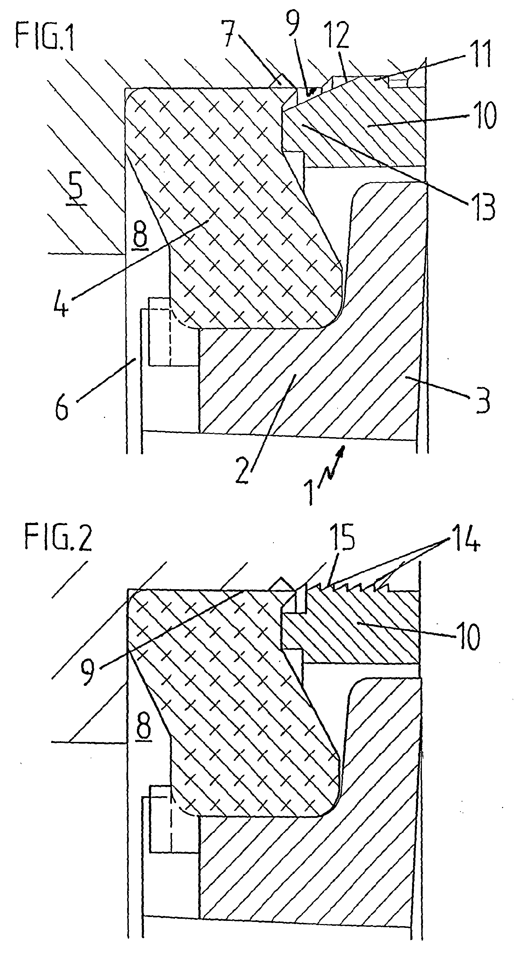

- Figur 1 und 2: Als Laufwerkdichtung ausgebildete Gleitringdichtung zum Einsatz unter hohen Innendrücken, beinhaltend Sicherungselemente unterschiedlicher Ausgestaltungsform.

Figur 1 zeigt eine als Laufwerkdichtung ausgebildete Gleitringdichtung 1, beinhaltend einen winkelförmig ausgebildeten Gleitring 2 mit einem Dichtschenkel 3, der im dem Dichtschenkel 3 abgewandten Bereich einen im Querschnitt etwa tellerfederförmigen Dichtkörper 4 aufnimmt. Die Laufwerkdichtung 1 soll in diesem Beispiel für eine Achse 5 mit nicht weiter dargestellter sogenannter nasser Bremse zum Einsatz gelangen. Bei den nassen Bremsen steht ein erhöhter Spül-/Kühldruck des Schmieröles im Bereich 6 hinter dem Dichtkörper 4 an, der in der Lage ist, den Dichtkörper 4 aus seiner Position in Richtung des Dichtschenkels 3 zu verschieben, wodurch die Laufwerkdichtung 1 unwirksam wird. Am Dichtkörper 4 ist in diesem Beispiel eine als Dichtlippe ausgebildete Sekundärdichtung 7 vorgesehen. Mit dem Bezugszeichen 8 ist die Aufnahmebohrung der Achse 5 gemeint. Die an sich bekannte Laufwerkdichtung 1 wird von Hand in die zylindrische Aufnahmebohrung 8 eingeschoben, wobei die als Dichtlippe ausgebildete Sekundärdichtung 7 radial verformt wird und dann an der äußeren Umfangsfläche 9 der Aufnahmebohrung 8 anliegt. Um nun zu vermeiden, dass, bedingt durch den anstehenden Innendruck, der Dichtkörper 4 in Richtung des Dichtschenkels 3 verschoben wird, kommt nun erfindungsgemäß ein Sicherungselement 10 zum Einsatz, das im Bereich seines Außenumfanges mit einem Radialansatz 11 versehen ist. Der eigentliche und bekannte Dichtungsquerschnitt braucht somit nicht verändert zu werden. Lediglich die Aufnahmebohrung 8 muß mit einem kleinen Hinterschnitt 12 versehen werden. Beim Eindrücken des bedarfsweise radial von innen und/oder außen geschlitzten Sicherungselementes 10, das in diesem Beispiel aus faserverstärktem Kunststoff, wie Polyamid, bestehen soll, springt der Radialansatz 11 in den Hinterschnitt 12, wodurch das Sicherungselement 10 in seiner Position axial und damit gegen Ausdrücken sicher arretiert ist. Ein dichtkörperseitig angearbeiteter oder angeformter Einführungs- und Klemmkeil 13 verpreßt zusätzlich die Sekundärdichtung, wodurch ein weiterer Dichteffekt erzielt wird.

Figur 2 entspricht vom konstruktiven Aufbau her im wesentlichen der Figur 1. Unterschiede sind lediglich bezüglich der Gestaltung der äußeren Umfangsfläche des Sicherungselementes 10 sowie der äußeren Umfangsfläche 9 der Aumahmebohrung 8 zu sehen. Das Sicherungselement 10 ist in diesem Beispiel mit einem sägezahnartig ausgebildeten Profil 14 versehen, das in korrespondierend ausgebildete Hinterschneidungen 15 der äußeren Umfangsfläche 9 der Aufnahmebohrung 8 nach erfolgter Montage eingreift.

## Patentansprüche

1. Gleitringdichtung, insbesondere Laufwerkdichtung (1), bestehend aus einem winkelförmigen Gleit- und/oder Gegenring (2) mit einer zur Aufnahme eines ringförmigen, im Querschnitt etwa tellerfederförmigen Dichtkörpers (4) bestimmten Umfangsfläche, wobei der Dichtkörper (4) bedarfsweise eine in den Bereich des Dichtschenkels (3) des Gleit- und/oder Gegenringes (2) weisende Sekundärdichtung (7) beinhaltet und sich mit Teilbereichen seiner äußeren Umfangsfläche an korrespondierenden Flächenbereichen einer Aufhahmebohrung (8) abstützt, **dadurch gekennzeichnet, dass** radial zwischen der äußeren Umfangsfläche des Gleit- und/oder Gegenringes (2) und der Aufnahmebohrung (8) ein, im Einbauzustand am Dichtkörper (4) anliegendes ringförmig ausgebildetes Sicherungselement (10) vorgesehen ist.

2. Gleitringdichtung nach Anspruch 1, **dadurch gekennzeichnet, dass** das Sicherungselement (10) aus Kunststoff, insbesondere faserverstärktem Kunststoff, wie Polyamid, gebildet ist.

3. Gleitringdichtung nach Anspruch 1 oder 2, **dadurch gekennzeichnet, dass** das Sicherungselement (10) mit mindestens einem an seinem Außenumfang vorgesehenen Ansatz (11) versehen ist.

4. Gleitringdichtung nach einem der Ansprüche 1 bis 3, **dadurch gekennzeichnet, dass** am Außenumfang des Sicherungselementes (10) ein sägezahnartiges Profil (14) angeformt ist.

5. Gleitringdichtung nach einem der Ansprüche 1 bis 4, **dadurch gekennzeichnet, dass** der Ansatz (11) bzw. das Profil (14) nach erfolgter Montage des Sicherungselementes (10) in zugehörige aufnahmebohrungsseitig eingebrachte Hinterschneidungen (12,15) eingreift.

6. Gleitringdichtung nach einem der Ansprüche 1 bis 5, **dadurch gekennzeichnet, dass** am Sicherungselement (10) dichtkörperseitig ein keilartiger Bereich (13) angeformt ist, der bei vorhandener Sekundärdichtung (7) selbige radial nach außen drückt.

7. Gleitringdichtung nach einem der Ansprüche 1 bis 6, **dadurch gekennzeichnet, dass** das Sicherungselement (10) radial von innen und/oder radial von außen geschlitzt ausgebildet ist.
